# EUROPEAN PATENT APPLICATION

(11) **EP 1 455 263 A1**
(43) Date of publication of application: **08.09.2004**
(21) Application number: 03290544.0
(22) Date of filing: 06.03.2003
(51) Int. Cl.: G06F 1/32

(54) **Power management in a computer system with network communications**

(71) Applicant: Hewlett-Packard Development Company, L.P., Houston, TX 77070 (US)
(72) Inventor: Fierri, Adrien, 73000 Chambery (FR)
(74) Representative: Lloyd, Richard Graham

(57) **Abstract**

The present invention relates to a computer system and method having a power management state in which communication network transactions take priority over any power management events in an effort to ensure that communication network transactions are not adversely affected by a power management system.

## Description

### Field of the Invention

The present invention relates to a computer system and method, and, more particularly, to power management of computing systems.

### Background to the invention

The computing industry has developed a common interface for enabling robust operating system directed motherboard system configuration and power management (OSPM) of entire computer systems. The common interface definition and functionality manifests itself in the Advanced Configuration and Power Interface (ACPI) specification. The current version of the ACPI is revision 2b, having a release date of October 11, 2002, which is incorporated herein by reference for all purposes.

The ACPI specification defines a number of operating states for computer systems, such as, for example, desktop, mobile, workstation and server computers and laptop computers. Currently, the ACPI specification defines a number of power management states that include states S0, S1, S2, S3 and S4. Each of the five states represents a different state or degree of power consumption of the associated computer system. State S0 represents the conventional operating state or working state in which the computer system is fully functional and is not in a power saving mode. The remaining states represent the system sleeping states in which the computer system has undertaken steps to reduce power consumption.

Various events may cause transitions between the power management states. These events include user generated events such as, for example, shut-down or system generated events such as placing the computer system in a stand-by mode or causing the computer system to hibernate pending detection of a wake-up event.

Entering the various power management states has different effects upon the various elements of the computer system such as the CPU, the memory, or various devices within or connected to the computer system. These devices may themselves assume various device states; each having respective degrees of power consumption.

While entering a reduced power consumption state may have the advantage of reducing the power consumption of the computer system as a whole, it may bear the disadvantage that it might interfere with the intended operation of the computer system. For example, within today's multi-media environment and with the advent of video-on-demand and other streaming or data exchange intensive communications, it may take a relatively long period of time to download or upload a large file or a movie from or to a server. It would be undesirable if the power management system interfered with the operation of a modem or LAN card during such a data exchange.

Suspending the power management of the computer system to allow long downloads or uploads to continue has the undesirable effects of maintaining a relatively high power consumption and maintaining the relatively noisy acoustic environment presented by the cooling system of the computer system.

Still further, there might be occasions when one may wish to reboot the computer system. However, rebooting the computer system when a data exchange is pending can only be performed without waiting for the data exchange to be completed by terminating or suspending the data exchange.

It is an object of embodiments of the present invention at least to mitigate some of the problems of the prior art.

### Summary of the Invention

Accordingly, a first aspect of embodiments of the present invention provides a computer system comprising communication means to exchange data with a communication network and a power management system for controlling the power consumption of the computer system; the power management system comprising means to maintain a current power consumption of the communication means if a data exchange, via the communication means, with the communication network is pending and means to at least reduce power consumption of the communication means if such a data exchange is not pending.

A further aspect of embodiments of the present invention provides a computer system comprising communication means to exchange data with a communication network and a power management system to maintain the communication means in an operable state to allow a data exchange with the communication network if such a data exchange is pending and to at least reduce the power consumption of the communication means if a data exchange is not pending.

Advantageously, embodiments of the present invention enable a computer system to be realised in which the power management system or policy does not interfere with pending data transmissions and receptions. A data exchange is considered to be pending if it is actually in progress or if it is planned for some time in the future. Furthermore, a communication network encompasses any means by which computer systems can exchange data and, therefore, encompasses a single link between computer systems, as well as LANs, WANs, wireless networks, the Internet and the like.

Preferred embodiments provide a computer system in which the power management system comprises means to determine that a data exchange is in progress and means operable to maintain the communication means in the operable state in response to that determination to allow the planned data exchange to be at least started and, preferably, completed.

Preferably, embodiments provide a computer system in which the power management system comprises means to determine that a data exchange is planned for a predetermined time and means to maintain the communication means in the operable state in response to that determination to allow the data exchange to be started and, preferably, completed.

Embodiments provide a computer system comprising a power supply for supplying power to the communication means and in which the power management system comprises means to control the power supply to control the power supplied to the communication means.

Further embodiments provide a computer system comprising a communication means to exchange data with a communication network and a power management system comprising means, responsive to a command to change a current power consumption state of the computer system to a different power consumption state, to maintain the communication means in an operable state to support a data exchange with the communication network if such a data exchange is pending and means to at least reduce the power consumption to the communication means if such a data exchange is not pending.

Still further embodiments provide a computer system comprising a communication means for exchanging data with a communication network and a power management system for controlling the power consumption of the computer system; the power management system comprising means to maintain a current power consumption of the communication means if a data exchange, via the communication means, with the communication network is pending and means to at least reduce power consumption of the communication means if such a data exchange is not pending.

Another aspect of embodiments of the present invention provides a method of operating a computer system; the method comprising the steps of controlling the power consumption of the computer system by maintaining a current power consumption of a communication means for exchanging data with a communication network if a data exchange, via the communication means, with the communication network is pending and reducing the power consumption of the communication means if such a data exchange is not pending.

### Brief Description of the Drawings

Embodiments of the present invention will now be described, by way of example only, with reference to the accompanying drawings in which:
figure 1 shows schematically a computer system according to an embodiment;
figure 2 illustrates schematically ACPI states and state transitions for computer systems;
figure 3 depicts power management states and associated state transitions of the computer system shown in figure 1; and
figure 4 shows a flowchart for a communication process of the computer system according to an embodiment.

### Description of the Preferred Embodiments

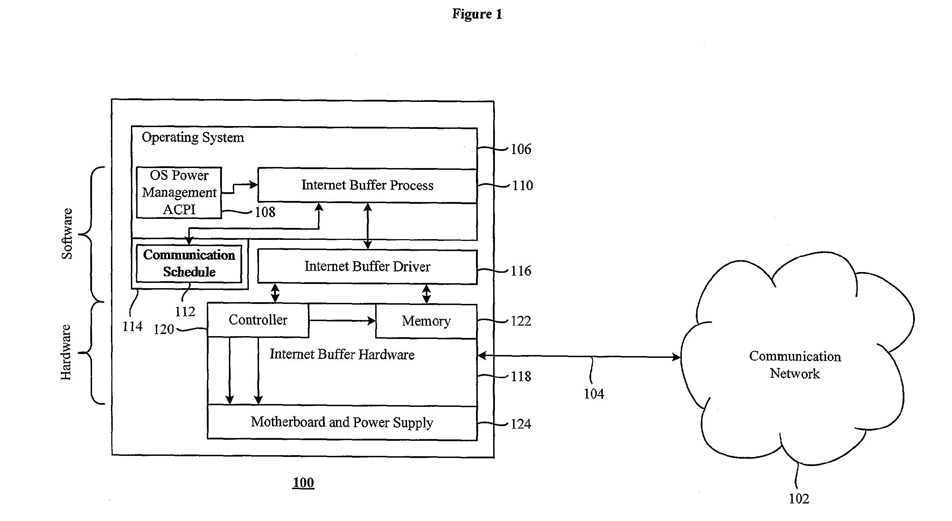

Figure 1 illustrates schematically a computer system 100 according to an embodiment. The computer system 100 is connected to a communication network 102 such as, for example, the Internet or a LAN, via an appropriate communication channel 104. The computer system 100 comprises an operating system 106 having an operating system directed power management system 108 (OSPM) via which ACPI specification power management can be realised. Commands issued by the OSPM system 108 are intercepted or trapped by a system application. In preferred embodiments, the system application is known as an Internet buffer process 110. The Internet buffer process 110 intercepts and filters the power management commands issued by the OSPM system 108 according to whether or not a communication schedule 112 stored within a memory 114 indicates that data exchanges with the communication network 102 are pending. A data exchange is considered to be pending if it is in progress, that is, ongoing, or if it is planned for sometime in the future.

The system application 110 manages, via a driver 116, the operation of a communication device 118. The communication device 118 is used to transmit data to and to receive data from the communication network 102 via the communication channel 104. Preferably, the communication device is a modem, LAN card or other form of communication device, such as, for example, an ADSL card or chipset. The communication device 118 comprises a controller 120 for controlling the operation of the device 118, and the interaction of the device 118 with the communication network 102 and the rest of the computer system 100. The communication device 118 comprises a memory 122 for storing data for transmission to, or data received from, the communication network 102 under the supervision of the controller 120. In preferred embodiments, the communication device is known as the Internet buffer hardware. It will be appreciated that the memory 122 of the device may be selected to be any convenient or cost effective size such as, for example, 256 Mbytes or several gigabytes should one wish to download a complete DVD quality movie.

At the lowest level, the computer system 100 comprises a motherboard and a power supply 124 as is conventional.

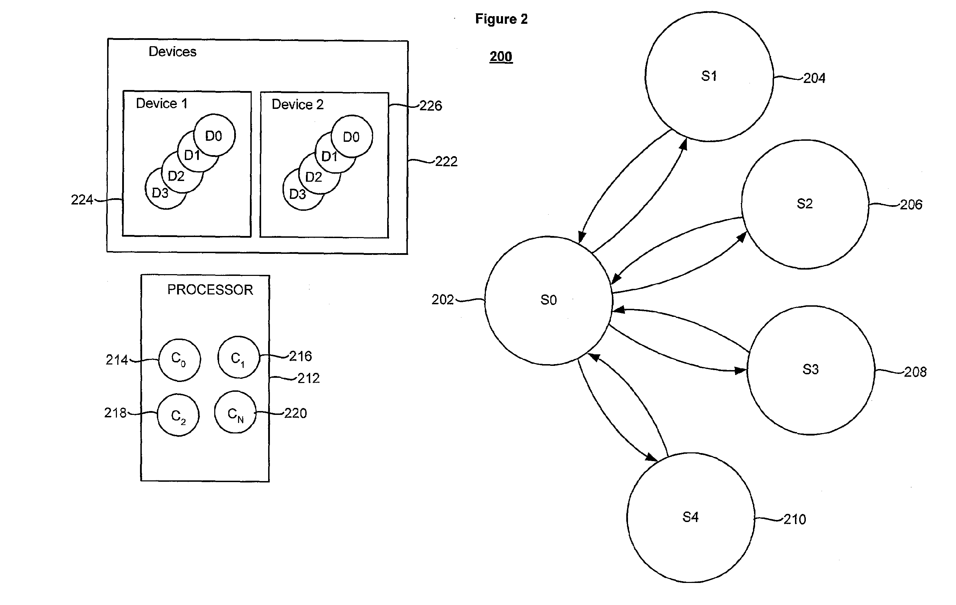

Referring to figure 2, there is shown a state diagram 200 of known power management states. The state diagram 200.has five states, that is, states S0 202, S1 204, S2 206, S3 208 and S4 210. The five states are briefly described below.

State S0: While the computer system 100 is in state S0, the computer system 100 is said to be in a working state. The behaviour of that state is defined such that a processor 212 is, or, in a multi-processor system, the processors are, in one of a number of so-called processor states, C₀ 214, C₁ 216, C₂ 218,..., C_{N} 220, which each represent varying degrees of processor operation and associated power consumption. The processor 212 maintains the dynamic RAM context. The operating system software 106 individually manages any devices 222, such as first 224 and second 226 devices, connected to, or forming part of, the computer system 100. The devices can be in any one of four possible device states D0-D3, which, again, reflect varying degrees of power consumption. Any associated power resources are arranged to be in a state that is compatible with the device states.
State S1: The S1 state 204 is a low wake-up latency sleeping state. In this state, no system context is lost (CPU or chipset) and the computer system hardware maintains all system context.
State S2: The S2 state 206 is also considered to be a low wake-up latency sleeping state. The S2 state 206 is substantially similar to the S1 state 204 but for the CPU and the system cache context being lost in the S2 state, since, typically, the operating system is responsible for maintaining cache and processor context.
State S3: The S3 state 208 is a low wake-up latency sleeping state where all system context is lost but for system memory. The CPU, cache and chip set context are lost in this state. However, the system hardware maintains memory context and restores some CPU and L2 configuration context.
State S4: The S4 state 210 is the lowest power, longest wake-up latency sleeping state supported by ACPI. To reduce power consumption, preferably to a minimum, it is assumed that the hardware platform has powered-off all devices but platform context is maintained.

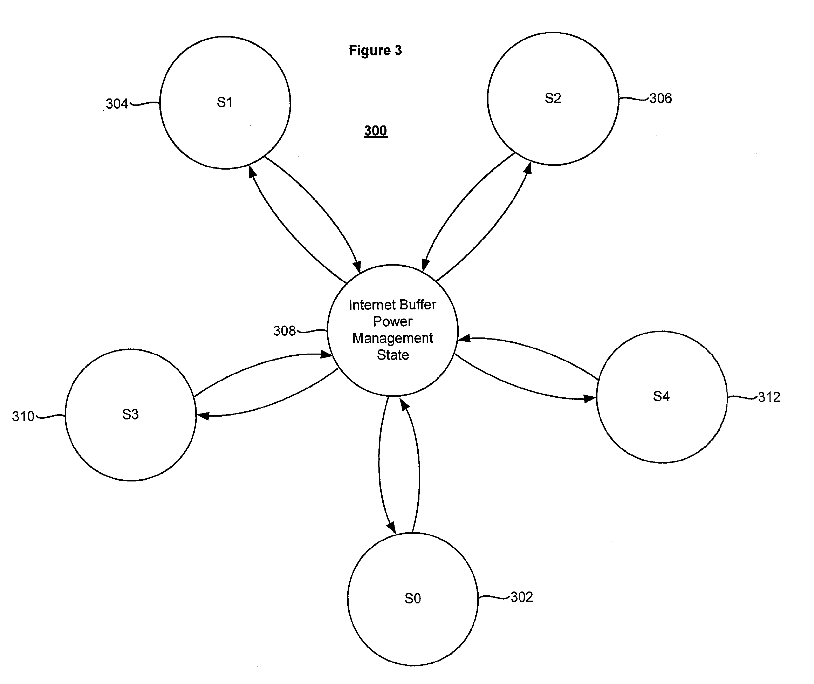

Figure 3 shows a state transition diagram 300 for a power management system according to an embodiment. It can be seen that the state transition diagram 300 comprises a working state S0 302. Preferably, the conventional states S1 304 to S4 312 are also supported. The states S0 to S4 of the embodiments are substantially identical in operation and realisation to the corresponding states described above in relation to figure 2 and as defined in the current ACPI specification.

Additionally, the state diagram 300 illustrates a new state, that is, a communication state, or Internet buffer power management state, 308. The behaviour of the computer system 100 in the communication state 308 can be characterised by the actions of ensuring that effect is given to ACPI power reduction commands or events subject to there being no pending data exchanges listed in the communication schedule 112. The communication state 308 is arranged to ensure that the communication device 118 is sufficiently functional to give effect to the pending data exchanges.

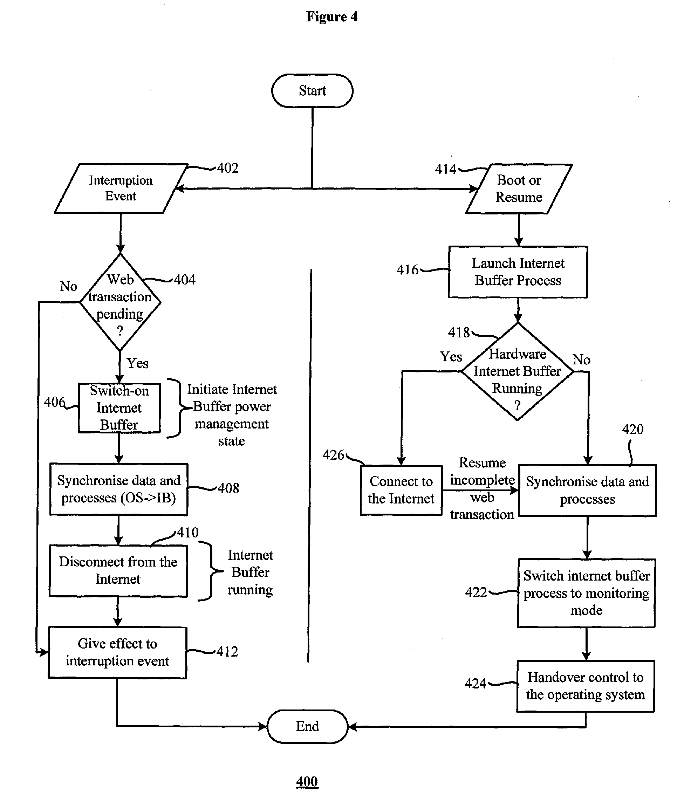

Figure 4 depicts a flowchart 400 of the operation of the computer system according to an embodiment. The flowchart 400 has two aspects; namely, a power-up aspect, shown on the right-hand side, and an interruption event aspect, shown on the left-hand side. The interruption event may include, for example, a reboot command, a standby or hibernate command, or a shutdown command. The arm of the flowchart taken by the computer system 100 is dependent upon whether or not the operating system 106 is running. If the operating system is running, processing follows the left arm of the flowchart, otherwise processing follows the right arm of the flowchart.

Assuming the operating system is running, an interruption event received at step 402 and directed to the OSPM system 108 causes the latter to issue commands or to generate events for placing the computer system 100 in one of the reduced power consumption states shown in figure 3. Those commands are intercepted by the system application 110, which determines, at step 404, whether there are any data exchanges pending, that is, in progress or planned. If it is determined at step 404 that there are data exchanges pending, the communication device is powered-up at step 406 and initialised at step 408 in preparation for assuming responsibility for the data exchanges and the pending data. The initialisation comprises transferring data to the communication device to allow the pending data exchanges to be supported. The data comprises data to be up-loaded, in the case of transmissions from the computer system, and appropriate address and status information relating to any ongoing or planned downloads. Such a synchronisation process between operating system control of data exchanges and communication device control of data exchanges takes place at step 408. The transferred data is stored in the memory 122 of the communication device 118. Once the data has been transferred to the memory 122, effect can be given to the interruption event subject to those aspects of the computer system supporting the data exchange remaining in a powered, that is, operable, state. Once the data exchanges have been completed, the communication device 118 is disconnected from the communication network at step 410 and effect is given to the interruption event, that is, the remaining actions required to give full effect to the interruption event are performed at step 412.

If the operating system is not running, the computer system 100 is re-booted or resumed from one of the reduced power consumption states at step 414. The system application 110 is launched at step 416. A determination is made at step 418 as to whether or not the communication device 118 is or has been operable. In preferred embodiments, this determination is made using a non-volatile flag that can be controlled by either the operating system or the communication device 118. The flag might be set prior to control being handed to the communication device 118. If the determination is negative, the content of the memory 122 is transferred to an appropriate storage medium at step 420 and the system application 110 enters a monitoring mode at step 422, which is used to trap further ACPI events. Once the system application has entered the monitoring mode at step 422, control for managing ongoing, or future, file transfers, that is, data exchanges or web-transactions, is handed over to the operating system at step 424.

If the determination at step 418 is that the communication device 118 has been or is currently operable, that is, has transmitted or received data or is transmitting or receiving data, the operating system 106 is connected to the communication network 102 at step 426. Data relating to, that is identifying, any data exchanges, completed, on-going or planned, for which the communication device 118 had responsibility is transferred to the operating system 106 together, in the case of downloads, with the data exchanged thus far for subsequent storage at step 420, that is, the operating system 106 and the communication device are synchronised. The communication schedule is updated to reflect the status of the pending data exchanges. The internet buffer process assumes a monitoring role at step 422 to detect any interruption events and the operating system 106 assumes responsibility for any pending data exchanges at step 424.

Alternatively, the communication device 118 might be arranged to complete any pending data exchanges before handing over control to the operating system. In such an embodiment, the completed data exchanges and data relating to such exchanges could be transferred as each exchange is completed or when all or a selected number of data exchanges have been completed. Furthermore, any data exchanges that arise during such a completion stage, might be handled by the operating system 106 in preference to transferring the exchange to the communication device.

Although the illustrated transitions shown in figure 3 are between reduced power states, the working state and the communication state, embodiments of the present invention are not limited to such an arrangement. Embodiments can equally well be realised in which the communication state 308 is passed through en route to a transition of the computer system 100 to one of the other reduced power states S1 to S4 or by passed altogether en route to one of the other reduced power states. The need to pass through the communication state is dependent upon there being any pending data exchanges.

Furthermore, even though the above embodiments have been described in terms of having a number of system states, the present invention is not limited to such system states. Embodiments can be realised in which other states such as, for example, Legacy states, mechanical-off states and soft-off states are also supported.

Although the above embodiments have been described with reference to the communication device having its own or on-board memory, embodiments are not limited to such an arrangement. The communication device may store data received or to be transmitted using some other memory such as, for example, system RAM or flash memory, HDD or some other form of non-volatile storage. It will be appreciated that additional power will be required to power such storage devices.

It will be appreciated by one skilled in the art that embodiments of the present invention can be realised in the form of a specific add-on card, as part of a chip-set for a computer system or as part of hardware and software that are added to the motherboard of a computer system.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings) or to any novel one, or any novel combination, of the steps of any method or process so disclosed.

## Claims

1. A computer system comprising communication means to exchange data with a communication network and a power management system for controlling the power consumption of the computer system; the power management system comprising means to maintain a current power consumption of the communication means if a data exchange, via the communication means, with the communication network is pending and means to at least reduce power consumption of the communication means if such a data exchange is not pending.

2. A computer system comprising a communication means for exchanging data with a communication network and a power management system to maintain the communication means in an operable state to allow a data exchange with the communication network if such a data exchange is pending and to at least reduce the power consumption of the communication means if a data exchange is not pending.

3. A computer system as claimed in claim 2 in which the power management system comprises means to determine that a data exchange is in progress and means operable to maintain the communication means in the operable state in response to that determination to allow the data exchange to be completed.

4. A computer system as claimed in claim 3 in which the power management system comprises means to determine that a data exchange is planned for a predetermined time and means to maintain the communication means in the operable state in response to that determination to allow the planned data exchange to be at least started.

5. A computer system as claimed in claim 4 in which the means to maintain the communication means in the operable state in response to that determination comprises means to allow the planned data exchange to be completed.

6. A computer system as claimed in any preceding claim, comprising a power supply for supplying power to the communication means and in which the power management system comprises means to control the power supply to control the power supplied to the communication means.

7. A computer system comprising communication means to exchange data with a communication network and a power management system comprising means, responsive to a command to change a current power consumption state of the computer system to a different power consumption state, to maintain the communication means in an operable state to support a data exchange with the communication network if such a data exchange is pending and means to at least reduce the power consumption to the communication means if such a data exchange is not pending.

8. A method of operating a computer system; the method comprising the steps of controlling the power consumption of the computer system by maintaining a current power consumption of a communication means for exchanging data with a communication network if a data exchange, via the communication means, with the communication network is pending and reducing the power consumption of the communication means if such a data exchange is not pending.

9. A method as claimed in claim 9 further comprising the steps of exchanging data with a communication network and maintaining the communication means in an operable state to allow a data exchange with the communication network if such a data exchange is pending and reducing the power consumption of the communication means if a data exchange is not pending.

10. A method as claimed in claim 9 further comprising the step of determining that a data exchange is in progress and maintaining the communication means in the operable state in response to that determination to allow the data exchange to be completed.

11. A method as claimed in claim 10 further comprising the steps of determining that a data exchange is planned for a predetermined time and maintaining the communication means in the operable state in response to that determination to allow the planned data exchange to be at least started.

12. A method as claimed in claim 11 further comprising the steps of maintaining the communication means in the operable state in response to that determination to allow the planned data exchange to be completed.

13. A method as claimed in any of claims 8 to 12 further comprising the steps supplying power, via a power supply, to the communication means and controlling the power supply to control the power supplied to the communication means.

14. A computer program element comprising computer readable code means for implementing a system or method as claimed in any preceding claim.

15. A computer program product comprising a computer readable storage medium having stored thereon a computer program element as claimed in claim 14.
